(19) Europäisches Patentamt
European Patent Office
Office européen des brevets

(11) Veröffentlichungsnummer: **0 294 751**
**A1**

# (12) EUROPÄISCHE PATENTANMELDUNG

(21) Anmeldenummer: **88109021.1**

(22) Anmeldetag: **07.06.88**

(51) Int. Cl.4: **C22B 58/00 , C01G 15/00 , //C22B3/00**

(30) Priorität: **11.06.87 DE 3719437**

(43) Veröffentlichungstag der Anmeldung: **14.12.88 Patentblatt 88/50**

(84) Benannte Vertragsstaaten: **AT BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Pfüller, Peter, Dr.**
**Samerbergweg 9**
**D-8269 Burgkirchen(DE)**

## (54) Verfahren zur Gewinnung von Gallium aus basisch wässrigen Natriumaluminatlösungen durch Flüssig-Flüssigextraktion.

(57) Es wird ein Verfahren zur Gewinnung von Gallium aus einer basisch wäßrigen Natriumaluminatlösung durch Flüssig-Flüssigextraktion beschrieben, bei dem die zu extrahierende wäßrige Natriumaluminatlösung mit einer wasserunlöslichen Extraktionslösung, bestehend im wesentlichen aus einem wasserunlöslichen substituierten Hydroxychinolin und einem ausgewählten wasserunlöslichen Aldoxim als Extraktionsmittel und aus einem wasserunlöslichen organischen Lösungsmittel für das Extraktionsmittel, in Kontakt gebracht wird, nach dem in Kontakt bringen der beiden Lösungen die organische Phase von der wäßrigen Phase abgetrennt und aus der organischen Phase das Gallium gewonnen wird.

**EP 0 294 751 A1**

# Verfahren zur Gewinnung von Gallium aus basisch wäßrigen Natriumaluminatlösungen durch Flüssig-Flüssigextraktion

Die Erfindung betrifft ein Verfahren zur Gewinnung von Gallium aus einer basisch wäßrigen Natriumaluminatlösung durch Flüssig-Flüssigextraktion, bei dem die basisch wäßrige Natriumaluminatlösung mit einer wasserunlöslichen organischen Extraktionslösung zur Aufnahme des Galliums in Kontakt gebracht wird, wobei die wasserunlösliche organische Extraktionslösung im wesentlichen aus einem ein wasserunlösliches substituiertes Hydroxychinolin enthaltenden Extraktionsmittel für das Gallium und aus einem wasserunlöslichen organischen Lösungsmittel für das Extraktionsmittel besteht, nach dem in Kontakt bringen der beiden Lösungen die organische Phase von der basisch wäßrigen Phase abgetrennt und aus der organischen Phase das Gallium gewonnen wird.

Ein solches Verfahren ist aus den beiden US-Patentschriften 3,971,843 und 4,559,203 bekannt. Nach der ersten Patentschrift wird ein wasserunlösliches substituiertes Hydroxychinolin allein als Extraktionsmittel für das Gallium eingesetzt und nach der zweiten Patentschrift Hydroxychinolin in Kombination mit einer sauren organischen Phosphorverbindung.

Gallium kommt in geringen Mengen in Bauxit vor, im allgemeinen in einer Menge von 0,002 bis 0,01 Gew.-%, bezogen auf Bauxit. Zur Gewinnung von reinem Aluminiumoxid aus Bauxit wird der Bauxit nach dem Bayer-Verfahren mit Natronlauge aufgeschlossen, wobei das Aluminium als Aluminat und das Gallium als Gallat in Lösung geht. Die sogenannte Bayer-Lauge stellt also eine wertvolle Rohstoff-Quelle zur Gewinnung von Gallium dar. So enthalten die nach dem Bayer-Verfahren erhaltenen mehr oder weniger stark basischen wäßrigen Natriumaluminatlösungen (die OH-Ionenkonzentration liegt in der Regel bei 3 mol pro Liter) etwa 100 bis 400 g pro Liter $Na_2O$, etwa 40 bis 150 g pro Liter $Al_2O_3$ und 100 bis 300 mg pro Liter Ga. Das Aluminium und das Gallium liegen, wie oben bereits erwähnt, in Form der Aluminat- und Gallat-Anionen vor, die mit $Al(OH)_4^-$ und $Ga(OH)_4^-$ wiedergegeben werden können. Bei den bekannten Flüssig-Flüssigextraktionen von Gallium aus den in Rede stehenden Natrium-Aluminatlösungen durch in Kontakt bringen der wäßrigen Aluminatlösung mit einem wasserunlöslichen substituierten Hydroxychinolin (8-Hydroxychinolin), das in einem wasserunlöslichen organischen Lösungsmittel gelöst ist (Extraktionslösung), erfolgt an der Phasengrenze wäßrige-organische Phase der Übergang und die Bindung des Galliums an das Hydroxychinolin in Form eines Chelats, bis sich ein Gleichgewicht eingestellt hat. Die Einstellung des Gleichgewichts sollte möglichst rasch erfolgen, denn davon hängt der Durchsatz an wäßriger und organischer Phase in der Extraktionsanlage ab. Stellt sich das Gleichgewicht der Extraktion nur langsam ein, muß die Verweilzeit der organischen und wäßrigen Phase in der Extraktionsanlage entsprechend verlängert werden auf Kosten des Durchsatzes. Mit dem in der US-Patentschrift 3,971,843 beschriebenen wasserunlöslichen Hydroxychinolin als alleinigem Extraktionsmittel für das Gallium wird eine relativ lange Zeit zur Einstellung des genannten Gleichgewichtes benötigt. Es hat nicht an Versuchen gefehlt, die Kinetik der Extraktion zu beeinflussen und zu beschleunigen, indem die an sich vorteilhaften Hydroxychinoline gemeinsam mit einer weiteren ausgewählten wasserunlöslichen organischen Verbindung, die insbesondere als Beschleuniger fungiert, eingesetzt werden. So werden gemäß US-Patentschrift 4,559,203 wasserunlösliche substituierte Hydroxychinoline und saure organische Phosphorsäureverbindungen, wie Mono- oder Diester der Phosphorsäure, Phosphonsäure oder Phosphinsäure als Extraktionsmittel eingesetzt. Nach dieser Patentschrift sind auch schon Carbonsäuren gemeinsam mit Hydroxychinolin als Extraktionsmittel für Gallium herangezogen worden. Diesen bekannten Mischungen aus Hydroxychinolin und aus Carbonsäuren oder Phosphorsäureestern als Beschleuniger haftet aber immer noch der Nachteil an, daß damit die angestrebte hohe Extraktionsgeschwindigkeit nicht erreicht wird.

Die Aufgabe der Erfindung liegt insbesondere darin, wirksame Beschleuniger für Hydroxychinolin im Hinblick auf die Verwendung als Extraktionsmittel für Gallium aus Bayer-Laugen zu finden, das heißt, ein Mittel zur Extraktion von Gallium aus basisch wäßrigen Natriumaluminatlösungen vorzuschlagen, das aus Hydroxychinolin und einer weiteren wasserunlöslichen organischen Verbindung als besonders wirksamen Beschleuniger besteht, so daß die Einstellung des in Rede stehenden Extraktionsgleichgewichtes unter praktisch vollständiger Extraktion des Galliums in einer relativ kurzen Zeit erreicht wird.

Das erfindungsgemäße Verfahren zur Gewinnung von Gallium aus einer basisch wäßrigen Natriumaluminatlösung durch Flüssig-Flüssigextraktion, bei dem die basisch wäßrige Natriumaluminatlösung mit einer wasserunlöslichen organischen Extraktionslösung zur Aufnahme des Galliums in Kontakt gebracht wird, wobei die wasserunlösliche organische Extraktionslösung im wesentlichen aus einem ein wasserunlösliches substituiertes Hydroxychinolin enthaltenden Extraktionsmittel für das Gallium und aus einem wasserunlöslichen organischen Lösungsmittel für das Extraktionsmittel besteht, nach dem in Kontakt bringen der beiden Lösungen die organische Phase von der basisch wäßrigen Phase abgetrennt und aus der organischen

Phase das Gallium gewonnen wird, ist dadurch gekennzeichnet, daß als Extraktionsmittel für das Gallium ein wasserunlösliches substituiertes Hydroxychinolin in Kombination mit einem wasserunlöslichen Aldoxim der nachstehenden Formel I,

$$R-\overset{H}{\underset{}{C}}=NOH$$

worin R ein Alkyl-, Alkenyl-, ein alicyclischer- oder ein Arylrest ist, eingesetzt wird, wobei das Gewichtsverhältnis von Aldoxim zu Hydroxychinolin 10 : 1 bis 1 : 10 beträgt.

Nachdem Aldoxime keine Chelate bilden und demnach zur Extraktion von Metallen, insbesondere Gallium, nicht fähig sind, war es ein überraschendes Ergebnis, daß mit der erfindungsgemäßen Zugabe von Aldoximen zu substituierten Hydroxychinolinen eine beträchtliche Beschleunigung der Einstellung der Gleichgewichtsverteilung von Gallium zwischen der basisch wäßrigen Phase und der organischen Phase erreicht wird.

Das Gewichtsverhältnis von Aldoxim zu Hydrcxychinolin ist vorzugsweise 2 : 1 bis 1 : 2 und insbesondere etwa 1 : 1. Bezüglich der Aldoxime sind solche der Formel I bevorzugt, die sich ergeben, wenn R ein Alkylrest mit 4 bis 18 C-Atomen ist, vorzugsweise mit 5 bis 12 C-Atomen. Der Alkylrest kann geradkettig oder verzweigt sein. Beispiele für geeignete Vertreter sind 2-Ethylbutanaloxim, n-Pentanaloxim, n-Octanaloxim, 2-Ethylhexanaloxim, Isononaloxim, n-Decanaloxim, 2-Methyldecanaloxim, 2-Methylundecanaloxim, n-Dodecanaloxim, Isotridecanaloxim und n-Pentadecanaloxim. Die erfindungsgemäß einzusetzenden Aldoxime sind bekannt und im Handel erhältlich. Es kann eine Aldoxim-Verbindung allein oder eine Mischung von 2 oder mehreren Aldoximen eingesetzt werden. Die Menge an Extraktionsmittel, das ist die Menge (Gewichtssumme) aus Hydroxychinolin und Aldoxim, kann in weiten Grenzen variieren. Sie beträgt im allgemeinen 1 bis 50 Gew.-%, vorzugsweise 5 bis 30 Gew.-%, bezogen auf das Gewicht der Extraktionslösung, das ist das Gewicht aus Extraktionsmittel (Hydroxychinolin plus Aldoxim) und Lösungsmittel (einschließlich eventueller Lösungsvermittler).

Als Hydroxychinoline werden vorzugsweise solche der nachstehenden Formel II eingesetzt,

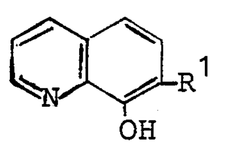

worin $R^1$ ein (geradkettiger oder verzweigter) Alkylrest mit 5 bis 15 C-Atomen ist, vorzugsweise mit 8 bis 12 C-Atomen. Diese 8-Hydroxychinoline sind aus den eingangs genannten US-Patentschriften wohl bekannt. Es kann eine Hydroxychinolin-Verbindung allein oder eine Mischung von 2 oder mehreren Hydroxychinolinen eingesetzt werden. Die einzusetzende Menge an Hydroxychinolin ergibt sich ebenso wie jene an Aldoxim aus der angegebenen Menge an Extraktionsmittel und aus dem angegebenen Gewichtsverhältnis zwischen Aldoxim und Hydroxychinolin.

Als wasserunlösliches organisches Lösungsmittel für das Extraktionsmittel werden, ebenso wie bei den bekannten Verfahren, vorzugsweise aliphatische Kohlenwasserstoffe, wie Hexan, Heptan und Petroleumfraktionen vom Kerosintyp, aromatische Kohlenwasserstoffe, wie Benzol, Toluol, Xylol und Cumol, oder chlorierte Kohlenwasserstoffe, wie Chloroform, Tetrachlorkohlenstoff, Dichlorethan oder Trichlorpropan, eingesetzt. Die Menge an organischem Lösungsmittel zur Bereitung der Extraktionslösung ergibt sich aus der angegebenen Konzentration an Extraktionsmittel in der Lösung.

Nach dem Stand der Technik (vergleiche die eingangs genannten Patentschriften) werden der Hydroxychinolin enthaltenden Extraktionslösung Lösungsvermittler, auch Modifier genannt, für die Gallium-Komplex-Verbindung zugesetzt. Es hat sich herausgestellt, daß die extraktive Wirkung auch der erfindungsgemäß einzusetzenden Mischung aus Hydroxychinolin und Aldoxim durch die genannten Lösungsvermittler vorteilhaft beeinflußt wird. Bevorzugte Lösungsvermittler sind Alkanole mit 4 bis 18 C-Atomen, vorzugsweise 8 bis 14 C-Atomen, wie Hexanol, Decanol, Isodecanol, Dodecanol, Isotridecanol und Pentadecanol; Triester der Phosphorsäure ($H_3PO_4$) mit Alkanolen mit 4 bis 10 C-Atomen, wie Tributylphosphat Trihexylphosphat und Trinonylphosphat; Diester der Mono-($C_1$-$C_8$-Alkyl)-Phosphonsäuren mit Alkanolen mit 4 bis 10 C-Atomen, wie Butanphosphonsäuredibutylester, Butanphosphonsäuredinonylester und Octanphosphonsäuredi-2-ethylhexylester; Ester (Monoester) der Di-($C_1$-$C_8$-Alkyl)-Phosphinsäuren, wie Dibutanphosphinsäurebutylester, Dibutanphosphinsäurenonylester und Dioctanphosphinsäurehexylester; und Tri-($C_1$-$C_8$-Alkyl)-Phosphinoxide, wie Tributanphosphinoxid, Trihexanphosphinoxid und Trioctanphosphinoxid. Die Lösungsvermittler werden in der Regel in einer Menge von 1 bis 20 Gew.-% eingesetzt, vorzugsweise 5 bis 10 Gew.-%, Gewichtsprozente bezogen auf das Gewicht der Extraktionslösung, das ist die Gewichtssumme aus Hydroxychinolin,

Aldoxim, organischem Lösungsmittel und Lösungsvermittler.

Die Menge der erfindungsgemäß einzusetzenden Extraktionslösung in Bezug auf die Menge an Natriumaluminatlösung, die extrahiert werden soll, kann in weiten Grenzen variieren. Im allgemeinen beträgt das Verhältnis zwischen der Volumenmenge an Extraktionslösung und der Volumenmenge an Natriumaluminatlösung 1 : 0,5 bis 1 : 5, vorzugsweise etwa 1 : 1. Auch die Temperatur während der erfindungsgemäßen Extraktion kann in weiten Grenzen variieren. Sie wird im allgemeinen bei einer Temperatur von 15 bis 60 °C, vorzugsweise 20 bis 40 °C, durchgeführt. Mit dem erfindungsgemäßen Extraktionsmittel kann also bei Raumtemperatur oder bei der Temperatur extrahiert werden, bei der die Bayer-Laugen anfallen (das ist etwa 50 °C).

Das erfindungsgemäße Verfahren der Extraktion von basisch wäßrigen Natriumaluminatlösungen kann in den üblichen Apparaturen, wie sie für Flüssig-Flüssigextraktionen vorliegen, durchgeführt werden. Dabei werden bekanntlich die zu extrahierende wäßrige Lösung, das ist die basisch wäßrige Natriumaluminatlösung, und die Extraktionslösung durch Mischen im Gleich- oder Gegenstrom, kontinuierlich oder diskontinuierlich, in Kontakt gebracht, worauf nach Einstellung des Extraktionsgleichgewichtes die organische Phase mit dem extrahierten Gallium von der wäßrigen Phase abgetrennt wird.

Auch die Gewinnung des Galliums aus der erhaltenen organischen Phase erfolgt nach den im Stand der Technik bekannten Methoden. Sie sind in den eingangs genannten Druckschriften ausführlich beschrieben. Im Rahmen des erfindungsgemäßen Verfahrens wird die Gewinnung des Galliums vorzugsweise wie folgt durchgeführt. Die das Gallium enthaltende organische Phase wird mit einer ersten, verdünnten wäßrigen Lösung einer Mineralsäure in Kontakt gebracht (unter Anwendung einer der obengenannten Methoden), um die in der organischen Phase gegebenenfalls anwesenden Anteile an Natrium und Aluminium in die verdünnte wäßrige Mineralsäurelösung aufzunehmen, während das Gallium in der organischen Phase bleibt. Nach Abtrennung der organischen Phase von der wäßrigen verdünnten Säurelösung wird die organische Phase mit einer zweiten, stärker konzentrierten Lösung einer Mineralsäure, in Kontakt gebracht, um das Gallium aus der organischen Phase in die zweite wäßrige Mineralsäurelösung aufzunehmen, aus der es dann gewonnen wird. Diese Extraktionen werden bei einer Temperatur von vorzugsweise 15 bis 25 °C durchgeführt. Als Mineralsäuren werden vorzugsweise Salzsäure, Schwefelsäure oder Salpetersäure eingesetzt, wobei Schwefelsäure und Salzsäure bevorzugt sind. Die Konzentration an Mineralsäure in der verdünnten wäßrigen Lösung liegt im Bereich von 0,1 bis 1 mol pro Liter, vorzugsweise 0,3 bis 0,7 mol pro Liter, und die Konzentration an Mineralsäure in der konzentrierten wäßrigen Lösung liegt im Bereich von 1,5 bis 3 mol pro Liter, vorzugsweise 2 bis 2,5 mol pro Liter. Das Volumenverhältnis zwischen den Mineralsäurelösungen und den damit zu behandelnden Phasen liegt bei 5 : 1 bis 1 : 5, vorzugsweise bei etwa 1 : 1. Das Gallium wird in Form von Salzen, wie Galliumsulfat oder Galliumchlorid, erhalten.

Mit dem erfindungsgemäßen Verfahren zur Extraktion von Gallium aus basisch wäßrigen Natriumaluminatlösungen wird sowohl eine rasche Einstellung des Extraktionsgleichgewichtes als auch eine praktisch vollständige Extraktion des angestrebten Galliums erreicht. Das neue Verfahren kann in den für Flüssig-Flüssigextraktionen üblichen Anlagen durchgeführt werden. Es erfordert auch keine besonderen Verfahrensbedingungen,beispielsweise bezüglich Temperatur, Phasenführung und dergleichen.

Die Erfindung wird nun an Beispielen noch näher erläutert.

Beispiele 1 bis 7

In allen Beispielen wurde eine technische Natriumaluminatlösung (Bayer-Lauge) der folgenden Zusammensetzung eingesetzt: 174 g/l $Na_2O$, 85 g/l $Al_2O_3$ und 150 mg/l Ga; die Extraktionslösung bestand aus 10 Gew.-% Hydroxychinolin der nachstehenden Formel

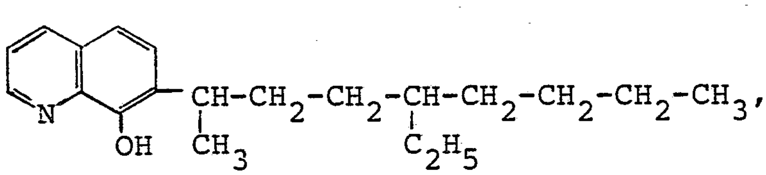, 10 Gew.-%

Aldoxim (in jedem Beispiel wurde eine andere Aldoximverbindung eingesetzt), 10 Gew.-% Isodecanol als Lösungsvermittler und 70 Gew.-% Kerosin als organisches Lösungsmittel. Die Extraktionslösung enthielt also das Hydroxychinolin und das Aldoxim in einem Gewichtsverhältnis von 1 : 1; die Menge an Extraktionsmittel (das ist Hydroxychinolin plus Aldoxim in dem angegebenen Verhältnis) in der Lösung

betrug 20 Gew.-%. Die in den Beispielen eingesetzten Aldoxime sind nachstehend angegeben:
Beispiel 1: 2-Ethylhexanaloxim
Beispiel 2: n-Pentanaloxim
Beispiel 3: 2-Ethylbutanaloxim
Beispiel 4: Isononaloxim
Beispiel 5: 2-Methylundecanaloxim
Beispiel 6: Isotridecanaloxim
Beispiel 7: 2-Methyldecanaloxim
In jedem Beispiel wurden gleiche Volumenteile Natriumaluminatlösung und Extraktionslösung im Volumenverhältnis 1 : 1 in einen Scheidetrichter gegeben und bei 20 °C 1, 2, 5, 10, 20 und 30 Minuten lang mit jeweils gleicher Intensität geschüttelt. Nach Abtrennung der beiden Phasen wurde die in der wäßrigen Phase noch vorhandene Galliummenge analytisch ermittelt; die Galliummenge in der organischen Phase wurde rechnerisch durch Differenzbildung ermittelt.

Vergleichsbeispiel 1

Es wurde wie in den erfindungsgemäßen Beispielen 1 bis 7 vorgegangen, mit dem Unterschied, daß kein Aldoxim eingesetzt wurde; die Extraktionslösung bestand also aus 10 Gew.-% von dem angegebenen Hydroxychinolin, 10 Gew.-% Isodecanol und 80 Gew.-% Kerosin.

Vergleichsbeispiel 2

Es wurde wie in den erfindungsgemäßen Beispielen 1 bis 7 vorgegangen, mit dem Unterschied, daß anstelle der 10 g Aldoxim 10 g eines Phosphorsäureesters als Beschleuniger eingesetzt wurden, und zwar der Di-(2-ethylhexyl)-phosphorsäureester.

Das Ergebnis der erfindungsgemäßen Beispiele 1 bis 7 und der Vergleichsbeispiele 1 und 2 ist nachstehend zusammengefaßt. Wie die Werte der extrahierten Galliummenge in Gewichtsprozent (bezogen auf die Galliummenge in der eingesetzten Natriumaluminatlösung) zeigen, wird mit dem erfindungsgemäß einzusetzenden Extraktionsmittel in kurzer Zeit ein sehr hoher Extraktionsgrad erreicht:

Extrahierte Galliummenge in Gew.-%

| Beispiele | Mischzeit in Minuten 1 | 2 | 5 | 10 | 20 | 30 |
|---|---|---|---|---|---|---|
| 1 | 70 | 81 | 92 | 92 | 92 | 92 |
| 2 | 61 | 67 | 74 | 80 | 91 | 91 |
| 3 | 70 | 75 | 91 | 95 | 95 | 95 |
| 4 | 53 | 61 | 84 | 84 | 84 | 84 |
| 5 | 65 | 68 | 77 | 79 | 81 | 82 |
| 6 | 8 | 13 | 43 | 47 | 65 | 84 |
| 7 | 24 | 65 | 72 | 84 | 84 | 84 |
| Vergleichs-beispiele | | | | | | |
| 1 | 13 | 16 | 29 | 35 | 43 | 50 |
| 2 | 11 | 20 | 30 | 40 | 50 | 57 |

**Ansprüche**

1. Verfahren zur Gewinnung von Gallium aus einer basisch wäßrigen Natriumaluminatlösung durch Flüssig-Flüssigextraktion, bei dem die basisch wäßrige Natriumaluminatlösung mit einer wasserunlöslichen organischen Extraktionslösung zur Aufnahme des Galliums in Kontakt gebracht wird, wobei die wasserunlösliche organische Extraktionslösung im wesentlichen aus einem ein wasserunlösliches substituiertes Hydroxychinolin enthaltenden Extraktionsmittel für das Gallium und aus einem wasserunlöslichen organischen Lösungsmittel für das Extraktionsmittel besteht, nach dem in Kontakt bringen der beiden Lösungen die organische Phase von der basisch wäßrigen Phase abgetrennt und aus der organischen Phase das Gallium gewonnen wird, dadurch gekennzeichnet, daß als Extraktionsmittel für das Gallium ein wasserunlösliches substituiertes Hydroxychinolin in Kombination mit einem wasserunlöslichen Aldoxim der nachstehenden Formel I,

$$R-\overset{H}{\overset{|}{C}}=NOH$$

worin R ein Alkyl-, Alkenyl-, ein alicyclischer- oder ein Arylrest ist,
eingesetzt wird, wobei das Gewichtsverhältnis von Aldoxim zu Hydroxychinolin 10 : 1 bis 1 : 10 beträgt.

2. Verfahren nach Anspruch 1, dadurch gekennzeichnet, daß das Aldoxim und das Hydroxychinolin in einem Gewichtsverhältnis von 2:1 bis 1 : 2 eingesetzt werden.

3. Verfahren nach Anspruch 1 oder 2, dadurch gekennzeichnet, daß ein Aldoxim der Formel I eingesetzt wird, wobei R ein Alkylrest mit 4 bis 18 C-Atomen ist.

4. Verfahren nach einem oder mehreren der Ansprüche 1 bis 3, dadurch gekennzeichnet, daß das Extraktionsmittel aus Hydroxychinolin und Aldoxim in einer Menge von 1 bis 50 Gew.-%, bezogen auf das Gewicht der Extraktionslösung, eingesetzt wird.

5. Verfahren nach einem oder mehreren der Ansprüche 1 bis 4, dadurch gekennzeichnet, daß das Extraktionsmittel aus Hydroxychinolin und Aldoxim in Kombination mit einem Lösungsvermittler für die gebildete Gallium-Komplexverbindung eingesetzt wird.

Europäisches Patentamt

# EUROPÄISCHER RECHERCHENBERICHT

Nummer der Anmeldung

EP 88 10 9021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 499 139 (GENERAL MILLS CHEMICALS, INC.) * Ansprüche; Seite 1, Absatz 3 * --- | | C 22 B 58/00<br>C 01 G 15/00 //<br>C 22 B 3/00 |
| A | FR-A-2 248 326 (FREEPORT MINERALS CO.) * Ansprüche; Seiten 10-12 * --- | | |
| A | EP-A-0 068 540 (METALLURGIE HOBOKEN-OVERPELT) * Ansprüche * ----- | | |

RECHERCHIERTE SACHGEBIETE (Int. Cl.4)

C 22 B
C 01 G

Der vorliegende Recherchenbericht wurde für alle Patentansprüche erstellt

| Recherchenort | Abschlußdatum der Recherche | Prüfer |
|---|---|---|
| DEN HAAG | 12-08-1988 | JACOBS J.J.E.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)